# EUROPEAN PATENT SPECIFICATION

(11) **EP 3 793 171 B1**
(45) Date of publication and mention of the grant of the patent: **03.04.2024**
(21) Application number: 19799823.0
(22) Date of filing: 09.05.2019
(51) Int. Cl.: H04L 41/0631

(54) **MESSAGE PROCESSING METHOD, APPARATUS, AND SYSTEM**
VERFAHREN, VORRICHTUNG UND SYSTEM ZUR NACHRICHTENVERARBEITUNG
PROCÉDÉ DE TRAITEMENT DE MESSAGE, APPAREIL, ET SYSTÈME

(30) Priority: 09.05.2018 CN 201810438739
(43) Date of publication of application: 17.03.2021
(73) Proprietor: ZTE Corporation, Shenzhen, Guangdong 518057 (CN)
(72) Inventor: LIU, Yong, Shenzhen, Guangdong 518057 (CN)
(74) Representative: Aipex B.V.
(86) International application number: PCT/CN2019/086218
(87) International publication number: WO 2019/214685

(56) References cited:
- CN-A- 101 252 441
- CN-A- 105 723 335
- CN-A- 107 968 840
- CN-A- 107 968 840
- CN-A- 108 737 522
- US-A1- 2012 102 503
- US-A1- 2017 180 321
- US-A1- 2018 089 324
- US-B1- 7 315 903

## Description

### TECHNICAL FIELD

The present application relates to data processing, for example, to a message processing method, apparatus and system.

### BACKGROUND

At present, streaming processing has been widely used in e-commerce, news aggregation, social networking sites, data mining, machine learning and other fields. Streaming processing has the characteristics of low delay, high performance, distribution, extensibility and fault tolerance, and can easily extend at thread, process and server levels. At present, there are many mature streaming processing frameworks, such as Storm, Spark, etc.

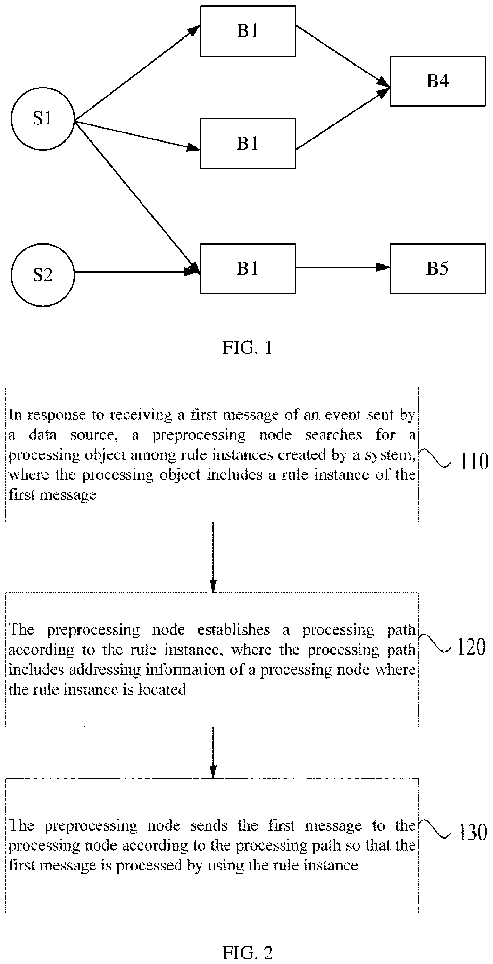

FIG. 1 is a system framework of streaming processing. In streaming processing, messages start from at least one data source and are processed by multiple nodes. S1 and S2 in FIG. 1 are data sources, and B1 to B5 are nodes that process the message. The advantage of streaming processing lies in the extension capability of message processing. Each stage of message processing can be extended, the extension including intra-process extension and inter-process extension. In this way, under the condition of sufficient hardware, unlimited extension of the message processing capability can be achieved.

In the field of telecommunication, with the advent of the 5-Generation (5G) network era, the number of mobile network devices accessed will be greatly increased. It is estimated that by 2020, 50 billion mobile devices will be accessed to the network. In this way, the number of network management devices will greatly increase, and network management software needs to process a large number of messages. The introduction of streaming processing can greatly improve the message processing capability of traditional network management, but traditional network management has some of its own traffic requirements, and an association analysis of a message according to an association analysis rule is one of the traffic requirements. Taking alarm messages as an example, the association analysis of an alarm message in the network management system is used to find out the association relationship between alarm messages generated by different events, so as to determine the main cause of alarm generation, and enable a user to quickly locate and solve the problem. For another example, in the network management system, a need also exists to merge alarm messages according to a merging rule, and so on. In the field of big data analysis, a need also exists to process messages according to various rules, such as an association analysis of messages of different news events, merging processing of messages of different purchase events, etc.

How to implement processing of messages according to corresponding rules in streaming processing is the focus of attention. In addition, some specific messages need to be processed in sequence, the implementation method of sequentially processing the specific messages in streaming processing is also the focus of attention.

Further the relevant technology is also known from US 2018/089324 A1 (PAL SOURAV [US] ET AL) 29 March 2018 (2018-03-29).

### SUMMARY

A message processing method is provided in an embodiment of the present application. The method includes: in response to receiving a first message of an event sent by a data source, a preprocessing node searching for a processing object among rule instances created by a system, the processing object comprising a rule instance of the first message; the preprocessing node establishing a processing path according to a found rule instance, the processing path comprising addressing information of a processing node where the found rule instance is located; and the preprocessing node sending the first message to the processing node according to the processing path so that the first message is processed on the processing node by using the found rule instance.

The present disclosure is set out in the appended set of claims.

A message processing method is also provided in an embodiment of the present application. The method includes: a processing node receiving a message of an event sent by a preprocessing node or a previous processing node; and in response to determining that the message is a first message of the event, the processing node processing the first message by using a corresponding rule instance on the processing node.

A message preprocessing node is also provided in an embodiment of the present application and includes a message receiving module, an instance searching module, a path establishing module, and a message sending module. The message receiving module is configured to receive a message sent by a data source; the instance searching module is configured to: after the message receiving module receives a first message of an event, search for a processing object among rule instances created by a system, where the processing object includes a rule instance of the first message; the path establishing module is configured to establish a processing path according to a found rule instance, where the processing path includes addressing information of a processing node where the found rule instance is located; and the message sending module is configured to: according to the processing path, send the first message to the processing node.

A message processing system is also provided in an embodiment of the present application and includes a data source, a preprocessing node and a processing node. The data source is configured to send all messages of an event to the preprocessing node; the preprocessing node is the preprocessing node described in preceding embodiments; and the processing node is configured to receive a message of the event sent by the preprocessing node, and in response to determining that the message is a first message of the event, process the first message by using a found rule instance on the processing node.

A message processing apparatus is also provided in an embodiment of the present application and includes a memory, a processor, and computer programs stored in the memory and executable on the processor, where when executing the computer programs, the processor implements the method according to the embodiment of the present application.

A computer-readable storage medium is also provided in an embodiment of the present application and configured to store computer programs, where when executing the computer programs, a processor implements the method according to the embodiment of the present application.

Other aspects can be understood after the drawings and the detailed description are read and understood.

### BRIEF DESCRIPTION OF DRAWINGS

FIG. 1 is a schematic diagram of streaming processing.
FIG. 2 is a flowchart of a message processing method according to embodiment one of the present application.
FIG. 3 is a diagram illustrating modules of a preprocessing node according to embodiment one of the present application.
FIG. 4 is a flowchart of a message processing method executed by a processing node according to embodiment one of the present application.
FIG. 5 is a schematic diagram illustrating step-by-step processing of a message according to embodiment two of the present application.
FIG. 6 is a flowchart illustrating an association analysis of a message according to embodiment two of the present application.
FIG. 7 is a schematic diagram illustrating an association analysis of an alarm message according to embodiment three of the present application.
FIG. 8 is a schematic diagram illustrating an association analysis of an alarm message according to embodiment four of the present application.
FIG. 9 is a schematic diagram illustrating an association analysis of an alarm message according to embodiment five of the present application.
FIG. 10 is a schematic diagram illustrating an association analysis of an alarm message according to embodiment six of the present application.
FIG. 11 is a schematic diagram illustrating an association analysis of news data according to embodiment seven of the present application.

### DETAILED DESCRIPTION

Embodiments of the present application will be described hereinafter in detail with reference to the drawings. It is to be noted that if not in collision, the embodiments and features therein in the present application may be arbitrarily combined with each other.

### Embodiment one

The embodiment provides a message processing method, which can dynamically calculate a processing path of a message in a streaming processing manner, and achieve distribution and processing of the message according to the processing path.

The message processing system in this embodiment is as shown in FIG. 1, a streaming processing framework such as a JStorm stream processing framework is adopted and includes data sources and nodes that process messages. These nodes are divided into two types, one type is called preprocessing nodes and the other type is called processing nodes. A preprocessing node is configured to receive a message of an event from a data source, establish a processing path of the message and distribute the message to a processing node. The processing node is configured to process the message by using the rule instance established according to a processing rule after receiving the message.

As shown in FIG. 2, a message processing method provided by the embodiment includes steps 110, 120 and 130.

In step 110, in response to receiving a first message of an event sent by a data source, a preprocessing node searches for a processing object among rule instances that have been created by a system, where the processing object includes a rule instance of the first message.

The term "an event" herein is merely used to refer to a certain event, not a special event. The first message of the event is the first message of the event collected by the data source in chronological order. In an example, the rule instance includes a rule instance created according to an association analysis rule, the event is an alarm event, the first message of the event is a generation message of the alarm event, and the processing of the message is an association analysis of the message. However, the event of the present application is not limited to this, and may, for example, be an action performed by the device, an event that occurs, etc. The message of an event may be any data related to the event. Messages of the same event carry the key of the event, such as a keyword, a name, an identifier (ID), etc. All messages of the same event can be identified by the key. For example, for a network management alarm, key information is a network element, and description information is alarm generation time, description etc.; for a news event, key information may be defined as generation time of news, and description information is the person, description, etc. involved in the news. The specific definition of key information should be defined by the application according to the actual application scenario.

In the embodiment, both a preprocessing node and a processing node are logical nodes, and a rule instance is created according to a processing rule and can run on the processing node so that traffic processing logic of the processing rule is executed. In an example, the preprocessing node and the processing node can be implemented by resource units with processing capabilities in processes or threads, while the rule instance is a program running on the processing node.

A rule instance requires traffic processing logic. In addition, a processing object of the rule instance also needs to be defined. For example, for a rule instance where an association analysis is performed on a message of an alarm event, the processing object may be defined by a limiting condition, e.g., through an identifier and an alarm code of a specified network element, the processing object is defined as an alarm event generated at the specified network element and having the specified alarm code. In the preprocessing node of the embodiment, information, such as the above-mentioned limiting condition, about the processing object of the rule instance created by the system is saved, and other information such as the identifier, parameter, type and the like of the rule instance may also be saved. In another embodiment, this information may also be stored at other nodes, and the preprocessing node reads this information from other nodes when needed.

In the embodiment, the created rule instances are created according to at least one processing rule, each processing rule corresponds to one traffic scenario and has different traffic processing logic. At least one rule instance can be created according to one processing rule, and processing objects and parameters of different rule instances may be different. In the embodiment, at least one rule instance can be run on one processing node, and when multiple rule instances exist, the processing node can determine which rule instance to run for processing according to the identifier of the rule instance written in the message. In the embodiment, processing nodes where the rule instances created according to different processing rules are located are different.

In the embodiment, the created rule instances may be divided into at least one group according to the processing rules, and rule instances created according to the same processing rule are divided into one group. A processing object is searched for among rule instances created by the system. When the processing object includes the rule instance of the first message, a group searching manner is adopted, and when at most one processing object including a rule instance of the event is found in each group, that is, after one rule instance is found in a group of rule instances, searching in the group of rule instances can be ended. In this way, among multiple rule instances created according to the same processing rule, merely one rule instance is used to process the event, so that the event merely has one unbranched association analysis path and merley one processing result. However, this is not necessary.

In step 120, the preprocessing node establishes a processing path according to the rule instance, where the processing path includes addressing information of a processing node where the rule instance is located.

In the embodiment, the addressing information of the processing node where the rule instance is located is represented by information that can uniquely identify the rule instance. For example, the addressing information of the processing node where the rule instance is located includes an identifier of the rule instance or an identifier and a type of the rule instance, where the created rule instances are created according to at least one processing rule, types of rule instances created according to a same processing rule are the same, and types of rule instances created according to different processing rules are different. Since the processing node where each rule instance is located is configured in the system, the information which can uniquely identify the rule instance can be used as addressing information, the result of each addressing can be guaranteed to be the same. Various specific addressing methods can be adopted, for example, Hash operation is performed on the identifier and the type of the rule instance, and a corresponding relationship between the Hash value and the processing node is searched for according to the obtained Hash value, so that the processing node where the rule instance is located is determined. These addressing methods may be implemented by using mechanisms provided by the streaming processing framework.

In step 130, the preprocessing node sends the first message to the processing node according to the processing path so that the first message is processed by using the rule instance.

In an example, processing the first message includes making an association analysis of the first message.

In the step, if a parameter is defined for a rule instance, when the preprocessing node sends the first message to the processing node, the parameter and the identifier of the rule instance are written into the first message, the first message is sent to the processing node, and the parameter and the identifier of the rule instance can be used when the first message is processed.

In the step, when multiple processing nodes exist, the preprocessing node can send the first message to the multiple processing nodes separately in a broadcast manner, and if necessary, parameters of rule instances are simultaneously sent. In the embodiment, a serial distribution manner is used, that is, the preprocessing node sends the first message to the first processing node in the processing path, and each processing node in the processing path sends the first message to the next processing node.

For example, the preprocessing node sends the first processing node the first message and addressing information of all processing nodes following the first processing node in the processing path; and each processing node receiving the first message processes the first message by using a found rule instance on the each processing node, and in response to determining that the each processing node is not the last processing node among the plurality of processing nodes, the first message and addressing information of all processing nodes following a next processing node in the processing path are sent to the next processing node.

The addressing information sent by the preprocessing node and the processing node described above is required for the next processing node to continue sending, which should not be understood as merely sending these addressing information. For example, the preprocessing node may also send addressing information of all the processing nodes in the processing path to the first processing node, and after the first processing node finds addressing information of the first processing node itself from the addressing information, addressing information of subsequent processing nodes can then be determined to enable continued sending of the message.

In the embodiment, after the preprocessing node establishes the processing path according to the rule instance, the preprocessing node saves the processing path, and in response to receiving a subsequent message of the event sent by the data source, sends the subsequent message to the processing node according to the saved processing path. The specific sending manner of the subsequent message is similar to the sending manner of the first message, but the processing node may not process the subsequent events when making an association analysis. Of course, subsequent events may also be processed if other traffic processing logic is used. In the embodiment, a mechanism supported by the streaming processing framework is used and all messages of an event are collected at the same data source and distributed to the same preprocessing node.

In the present application, a processing path of the message is established and distribution is performed according to the processing path, so that the message can be processed according to the created rule instance in the streaming processing.

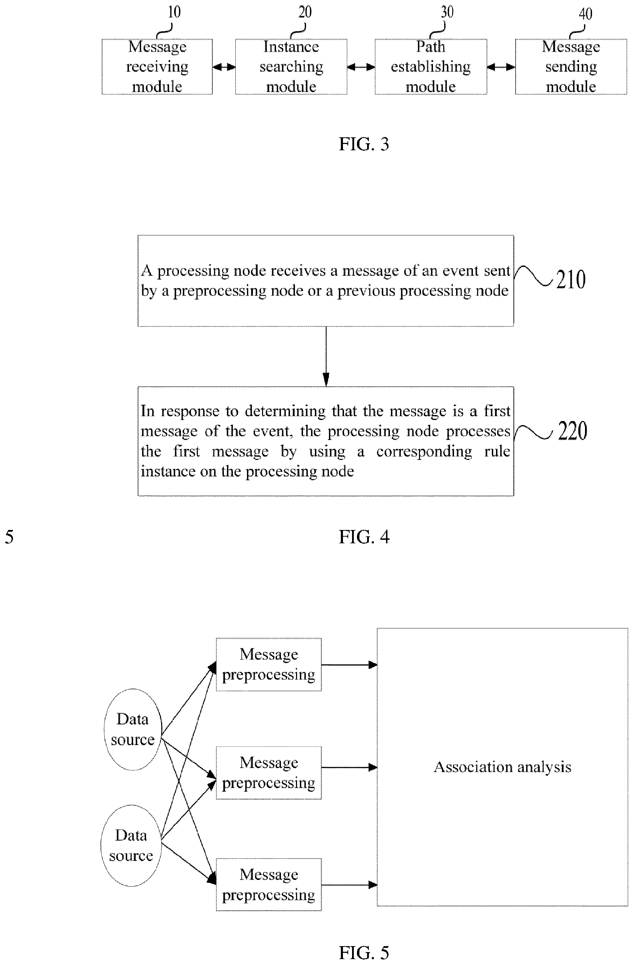

A message preprocessing node is further provided in the embodiment, and as shown in FIG. 3, includes a message receiving module 10, an instance searching module 20, a path establishing module 30 and a message sending module 40.

The message receiving module 10 is configured to receive a message sent by a data source.

The instance searching module 20 is configured to: after the message receiving module receives a first message of an event, search for a processing object among rule instances created by a system, where the processing object includes a rule instance of the first message.

The path establishing module 30 is configured to establish a processing path according to the rule instance, where the processing path includes addressing information of a processing node where the rule instance is located.

The message sending module 40 is configured to: according to the processing path, send the first message to the processing node for processing.

In the embodiment, the path establishing module is configured to: after the processing path is established, save the processing path; and the message sending module is further configured to: after the message receiving module receives a subsequent message of the event sent by the data source, send the subsequent message to the processing node according to the saved processing path.

In the embodiment, the created rule instances are created according to at least one processing rule, and processing nodes where rule instances created according to different processing rules are different.

In the embodiment, the created rule instances are divided into at least one group, and rule instances created according to the same processing rule are divided into one group; searching for, by the instance searching module, the processing object among the created rule instances, where the processing object includes the rule instance of the first message, includes: searching for, by the preprocessing node, a rule instance in each group, and searching for at most one processing object in the each group, where the processing object includes a rule instance of the event.

In the embodiment, in the processing path established by the path establishing module, the addressing information of the processing node where the rule instance is located includes an identifier of the rule instance or an identifier and a type of the rule instance, where the created rule instances are created according to at least one processing rule, types of rule instances created according to a same processing rule are the same, and types of rule instances created according to different processing rules are different.

In the embodiment, sending, by the message sending module, the first message to the processing node includes: writing a parameter and an identifier of the rule instance into the first message and sending the first message to the processing node.

In the embodiment, the processing path established by the path establishing module includes addressing information of a plurality of processing nodes; and the message sending module is configured to: send the first processing node the first message and addressing information of all processing nodes following a first processing node in the processing path, where the first message carries a parameter and an identifier of the rule instance.

In the embodiment, the rule instances include a rule instance created according to an association analysis rule.

A message processing method executed by a processing node is further provided in the embodiment, and as shown in FIG. 4, includes steps 210 and 220.

In step 210, a processing node receives a message of an event sent by a preprocessing node or a previous processing node.

In step 220, in response to determining that the message is a first message of the event, the processing node processes the first message by using a corresponding rule instance on the processing node.

The "corresponding rule instance" on the processing node in the step is the rule instance found by the preprocessing node described above, that is, the processing object includes the rule instance of the event. In the embodiment, the event is an alarm event, and the rule instance merely needs to make an association analysis of the first message of the event, and merely distributes other messages of the event.

In the embodiment, the message is sent in a serial distribution manner, and in response to receiving the message of the event, the processing node receives addressing information of a subsequent processing node (referring to a processing node following the processing node) in a processing path of the event; and after receiving the addressing information, the processing node saves the addressing information, and sends the first message to the subsequent processing node according to the addressing information; and in response to receiving a subsequent message of the event, the processing node sends the subsequent message to the subsequent processing node according to the saved addressing information.

In the embodiment, after the processing node processes the first message by using the corresponding rule instance on the processing node, the method further includes: in response to generating a new message of the event when the first message is processed and according to the traffic processing logic, sending the new message to a data source responsible for collecting the message of the event. In this way, the message of an event is still processed sequentially by the original data source, the preprocessing node and the processing node in the processing path.

A message processing system is further provided in the embodiment and includes a data source, a preprocessing node and a processing node. The data source is configured to send all messages of an event to the same preprocessing node; the preprocessing node is any preprocessing node described above; and the processing node is configured to receive a message of the event sent by the preprocessing node, and in response to determining that the message is a first message of the event, process the first message by using a rule instance on the processing node.

In the embodiment, in response to receiving the message of the event, the processing node receives addressing information of a subsequent processing node in a processing path of the event; and after determining that the message is a first message of the event, the processing node saves the addressing information of the subsequent processing node and sends the first message to the subsequent processing node according to the addressing information; and in response to receiving a subsequent message of the event, the subsequent message is sent to the subsequent processing node according to the saved addressing information.

In the embodiment, after the processing node processes the first message by using the corresponding rule instance on the processing node, the method further includes: in response to generating a new message of the event when the first message is processed, sending the new message to a data source responsible for collecting the message of the event.

In the embodiment, the rule instances include a rule instance created according to an association analysis rule.

A message processing apparatus is further provided in the embodiment and includes a memory, a processor, and computer programs stored in the memory and executable on the processor, where when executing the computer programs, the processor can implement any processing as in the method of the embodiment.

Streaming processing is adopted for message processing in the embodiment, and the dynamically generated processing path of a message is used for message distribution. The messages of the same event are distributed according to the same processing path, which can ensure the sequential processing of all messages of the same event.

### Embodiment two

The embodiment relates to a message association analysis method. In a manner of streaming processing, an association analysis path of a message is dynamically calculated, the association analysis of the message distribution is made according to the association analysis path, and a method to ensure that all messages of the same event are processed in sequence is provided.

In the embodiment, network management is taken as an application scenario, and the scenario involves a large number of alarm events. Multiple messages will be generated in each event, and can be divided into: a generation message and a subsequent message. The generation message is a message generated when the event is generated; and a subsequent message is a message generated after the event is generated, such as a change message of the event, a clear message of the event, etc.

Different messages of the same event have the same key and need to be processed in sequence.

In the embodiment, an association analysis of first messages of events is made, that is, the relationship between multiple events is analyzed, so that the user can quickly obtain useful information. In practical application, many application scenarios exist, each scenario may have its own association analysis method, these association analysis methods are defined as association rules, so different scenarios may correspond to different association rules.

In the embodiment, the following content is defined for a rule instance: a limiting condition, traffic processing logic and a parameter.

The limiting condition is used for defining the processing object of a rule, or to define the effective range of the rule. The limiting condition defines which events the rule is effective on and can be specified by the user. For example, the user can specify at least one network element, at least one alarm code, at least one alarm level, etc. as the limiting condition for a rule instance.

The traffic processing logic refers to the processing logic when an association analysis is made of a message that meets the limiting condition.

The parameter is an input parameter for the association analysis of a rule instance, may be specified by the user, and may, for example, be alarm delay time.

The user can create at least one rule instance according to one association rule, and the limiting condition and the parameter of each rule instance are specified by the user. According to the method of the embodiment, messages that meet the limiting condition of a certain rule instance (i.e., the messages are the processing objects of the rule instance) will be distributed to the association analysis node where the rule instance is located for analysis together, thus obtaining the relationship between events and finally displaying to the user.

Referring to FIG. 5, the association analysis method of the message in the embodiment is divided into two stages: a preprocessing stage and an association analysis processing.

In the preprocessing stage, it is determined whether the first message of an event meets the limiting condition of at least one rule instance created in the system. Based on the determination result that the first message of the event meets the limiting condition of at least one rule instance created in the system, an association analysis path is established, and the first message of the event and the parameter of the rule instance are distributed to a corresponding association analysis node according to the association analysis path for second-stage processing; based on the determination result that the first message of the event does not meet the limiting condition of at least one rule instance created in the system, the event will not be processed by the rule instance.

In the association analysis processing, the rule instance on the association analysis node makes an association analysis of the received first message of an event according to the traffic processing logic and the parameter.

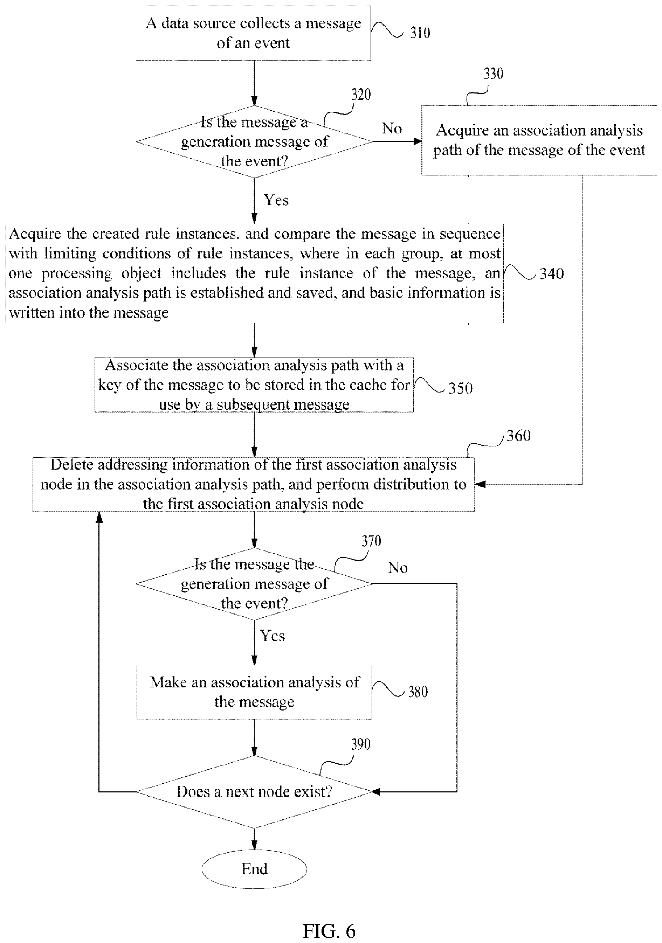

An association analysis method of a message in the embodiment is as shown in FIG. 6. Assuming that the user has created in the system multiple rule instances for making the association analysis, the method includes steps 310 to 390.

In step 310, a data source collects a message of an event and sends the message to a preprocessing node.

The embodiment is based on a streaming processing framework, events are collected from multiple data sources, and all messages of the same event are collected and distributed from the same data source.

In step 320, a preprocessing node determines a type of the message, and the process proceeds to step 340 based on the determination result that the type of the message is the generation message of the event, and the process proceeds to step 330 based on the determination result that the type of the message is not the generation message of the event.

In step 330, an association analysis path of the event is acquired from the cache according to the key of the message, and the process proceeds to step 360.

In step 340, the created rule instances are acquired, and the rule instances are divided into multiple groups according to corresponding association rules, where rule instances created according to the same association rule are divided into one group; the message is compared in sequence with the limiting condition for each group of rule instances, at most one processing object including the rule instance of the message is found in each group of rule instances, the identifiers and types of all the found rule instances are sequentially arranged, an association analysis path is established, and basic information such as parameters of the rule instances, identifiers of the rule instances and the like are written into the message.

In the step, the processing object including the rule instance of the message means that the message meets the limiting condition of the rule instance. In the step, if multiple rule instances are found altogether, the identities and types of the multiple rule instances may be arranged in a preset sorting manner, for example, the identifier and type of rule instance A, the identifier and type of rule instance B, and the identifier and type of rule instance C. The identifier and type of a rule instance is addressing information of an association analysis node where the rule instance is located, and a specific addressing process can be implemented by a mechanism provided by a streaming processing framework.

In the step, the parameter of the rule instance may also be sent as separate information, depending on the format of the information sent.

In step 350, the preprocessing node associates the association analysis path with the key of the message to be stored in the cache for use by a subsequent message.

In step 360, the message is sent to the next association analysis node in the association analysis path, and addressing information of all association analysis nodes following the next association analysis node in the association analysis path is sent together with the message.

When the step is executed by the preprocessing node, the next association analysis node is the first association analysis node in the association analysis path. When the step is executed by an association analysis node in the association analysis path, the next association analysis node is the first association analysis node following the association analysis node in the association analysis path.

In step 370, the association analysis node receiving the message determines the type of the message, and the process proceeds to step 380 based on the determination result that the type of the message is the generation message of the event, or the process proceeds to step 390 based on the determination result that the type of the message is not the generation message of the event.

In step 380, the association analysis node receiving the message acquires the parameter of the rule instance carried in the message and makes an association analysis of the message by using the rule instance running on the association analysis node.

In step 390, the association analysis node receiving the message determines whether addressing information of the next analysis node still exists in the association analysis path, and based on the determination result that no addressing information of the next node exists, the processing ends; based on the determination result that the addressing information of the next node still exists, the process returns to step 360.

### Embodiment three

When multiple alarm messages are reported and if the multiple alarm messages all meet the limiting condition of the same association rule, the multiple alarm messages will be distributed to the same association analysis node for processing. The limitation that multiple alarm messages conform to the same association rule is taken as an example, and the association analysis processing in this case is described below.

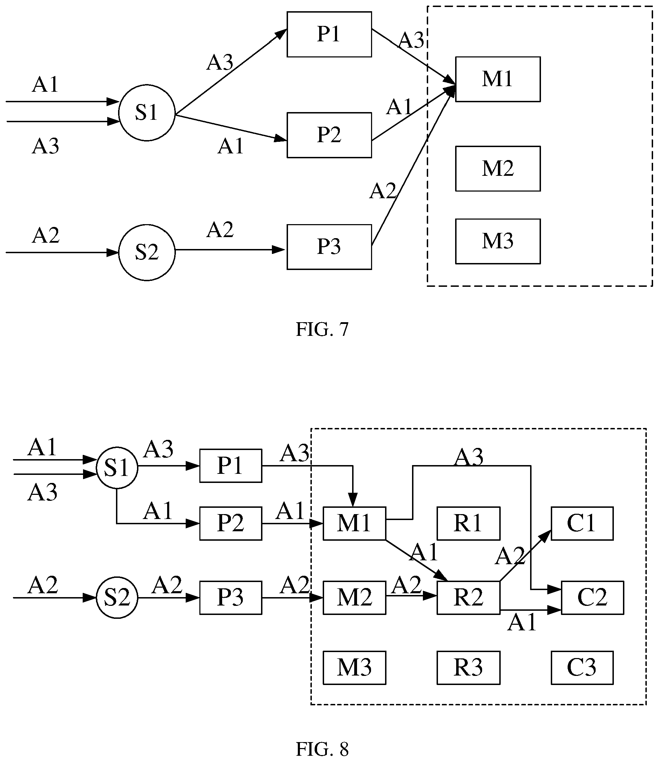

Referring to FIG. 7, multiple rule instances have been created according to the same association rule in the system, types of association rules are created, the reported alarm messages all conform to one of the rule instances, and then the processing process includes steps 1 to 12.

In step 1, data source S1 receives an alarm message A1.

The data source may be an alarm collection module on a network element.

In step 2, according to information about the network element of the alarm message A1, the data source S1 distributes the alarm message A1 to a preprocessing node P2 for processing.

In step 3, after receiving the alarm message A1, the preprocessing node P2 finds through preprocessing of an association analysis that the alarm message A1 meets the limiting condition of the rule instance M1, and thus generates an association analysis path [M1].

The association analysis path [M1] represents the addressing information of the association analysis node M1, and can be specifically represented by the identifier and type of the rule instance, with M representing the type and 1 representing the ID. The other subsequent embodiments are the same.

In step 4, according to the association analysis path, the preprocessing node P2 sends the alarm message A1 to the association analysis node M1 for processing, and then continues to process the subsequent processing.

The above association analysis node and the rule instance thereon use the same mark. For example, the association analysis node where the rule instance M1 is located is represented as association analysis node M1. Distribution is performed to the association analysis node M1 for processing, that is, the rule instance M1 on the association analysis node M1 makes an association analysis of the alarm message A1. The other embodiments are the same.

In step 5, data source S2 receives alarm message A2.

In step 6, according to information about the network element of the alarm message A2, the data source S2 distributes the alarm message A2 to a preprocessing node P3 for processing.

In step 7, after receiving the alarm message A2, the preprocessing node P3 finds through preprocessing of an association analysis that the alarm message A2 meets the limiting condition of the rule instance M1, and thus generates the association analysis path [M1] of the alarm message A2.

In step 8, according to the association analysis path, the preprocessing node P3 sends the alarm message A2 to the association analysis node M1 for processing, and then continues to process the subsequent processing.

In step 9, the data source S1 receives an alarm message A3.

In step 10, according to information about the network element of the alarm message A3, the data source S1 distributes the alarm message A3 to the preprocessing node P1 for processing.

In step 11, after receiving the alarm message A3, the preprocessing node P1 finds through preprocessing of an association analysis that the alarm message A3 meets the limiting condition of the rule instance M1, and thus generates the association analysis path [M1] of the alarm message A3.

In step 12, according to the association analysis path, the preprocessing node P1 sends the alarm message A3 to the association analysis node M1 for processing, and then continues to process the subsequent processing.

### Embodiment four

When multiple alarms conform to multiple association rules, the alarm messages are processed respectively according to their own association analysis paths. The embodiment will describe the association analysis method of a message in this scenario.

Referring to FIG. 8, multiple groups of rule instances are created according to various association rules in the system. In the figure, M1 to M3 are one group, R1 to R3 are one group, and C1 to C3 are one group. The reported alarm messages each meet the limiting condition of at least one rule instance. The processing process includes steps 1 to 12.

In step 1, a data source S1 receives an alarm message A1.

In step 2, according to information about the network element of the alarm message A1, the data source S1 distributes the alarm message A1 to a preprocessing node P2 for processing.

In step 3, after receiving the alarm message A1, the preprocessing node P2 finds through preprocessing of an association analysis that the alarm message A1 meets the limiting conditions of rule instances M1, R2 and C2, and thus generates the association analysis path [M1, R2, C2] of the alarm message A1.

In step 4, according to the association analysis path, the preprocessing node P2 sends the alarm message A1 to association analysis node M1 for processing, M1 then sends the message to association analysis node R2 for processing, R2 then sends the message to association analysis node C2 for processing, and then continues to process the subsequent processing.

In step 5, a data source S2 receives an alarm message A2.

In step 6, according to information about the network element of the alarm message A2, the data source S2 distributes the alarm message A2 to a preprocessing node P3 for processing.

In step 7, after receiving the alarm message A2, the preprocessing node P3 finds through preprocessing of an association analysis that the alarm message A2 meets the limiting conditions of rule instances M2, R2 and C1, and thus generates association analysis path [M2, R2, C1] of the alarm message A2.

In step 8, according to the association analysis path, the preprocessing node P3 sends the alarm message A2 to association analysis node M2 for processing, M2 then sends the message to association analysis node R2 for processing, R2 then sends the message to association analysis node C1 for processing, and then the subsequent processing process continues.

In step 9, the data source S1 receives an alarm message A3.

In step 10, according to information about the network element of the alarm message A3, the data source S1 distributes the alarm message A3 to the preprocessing node P1 for processing.

In step 11, after receiving the alarm message A3, the preprocessing node P1 finds through preprocessing of an association analysis that the alarm message A3 meets the limiting conditions of rule instances M1 and C2, and thus generates the association analysis path [M1, C2] of the alarm message A3.

In step 12, according to the association analysis path, the preprocessing node P1 sends the alarm message A3 to the association analysis node M1 for processing, then the association analysis node M1 sends the message to an association analysis node C2 for processing, and then continues to process the subsequent processing.

### Embodiment five

After an association analysis path of an alarm report message is generated, all subsequent messages of the alarm will be processed according to the association analysis path. In this example, different messages of the same alarm are taken as an example to describe the association analysis of a message.

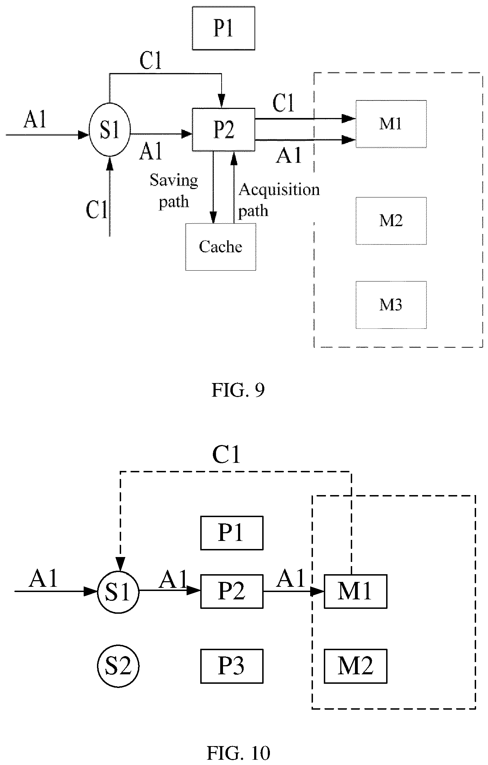

As shown in FIG. 9, multiple rule instances have been created in the system, and the reported alarm conforms to one of the rule instances. The processing process includes steps 1 to 12.

In step 1, a data source S1 receives an alarm message A1.

In step 2, according to information about the network element from which the alarm message A1 is generated, the data source S1 sends the alarm message A1 to a preprocessing node P2 for processing.

In step 3, the preprocessing node P2 finds through preprocessing of an association analysis that the alarm message A1 meets the limiting condition of rule instance M1, and generates association analysis path [M1] of the alarm message A1.

In step 4, according to the association analysis path, the preprocessing node P2 sends the alarm message A1 to the association analysis node M1 for processing, and then continues to process the subsequent processing.

In step 5, the data source S1 receives a change message C1 of the alarm to which the alarm message A1 belongs.

In step 6, according to information about the network element from which the change message C1 is generated, the data source S1 sends the change message C1 to the preprocessing node P2 for processing.

In step 7, the preprocessing node P2 obtains the association analysis path [M1] of the alarm message A1 through query.

In step 8, according to the association analysis path, the preprocessing node P2 sends the change message C1 to the association processing node M1 for processing, and then continues to process the subsequent processing.

In step 9, the data source S1 receives a clear message D1 of the alarm to which the alarm message A1 belongs.

In step 10, according to information about the network element from which the clear message D1 is generated, the data source S1 sends the clear message D1 to the preprocessing node P2 for processing.

In step 11, the preprocessing node P2 obtains the association analysis path [M1] of the alarm message A1 through query.

In step 12, according to the association analysis path, the preprocessing node P2 sends the clear message D1 to the association analysis node M1 for processing, and then continues to process the subsequent processing.

### Embodiment six

A new message may be generated during the process of association analysis of an alarm message. This example describes the relevant processing process for this case.

Referring to FIG. 10, assuming that multiple rule instances for association analysis have been created in the system, and the reported alarm conforms to one of the rule instances, the relevant processing process includes steps 1 to 8.

In step 1, a data source S1 receives an alarm message A1.

In step 2, according to information about the network element from which the alarm message A1 is generated, the data source S1 sends the alarm message A1 to a preprocessing node P2 for processing.

In step 3, the preprocessing node P2 finds through preprocessing of an association analysis that the alarm message A1 meets the limiting condition of rule instance M1, and generates association analysis path [M1] of the alarm message A1.

In step 4, according to the association analysis path, the preprocessing node P2 sends the alarm message A1 to the association analysis node M1 for processing, and after the alarm message A1 is processed by the association analysis node M1, new change message C1 of the alarm to which the alarm message A1 belongs is generated.

In step 5, the association analysis node M1 sends the change message C1 to the data source S1 for processing.

In step 6, according to information about the network element from which the alarm message A1 is generated, the data source S1 distributes the change message C1 and sends the change message C1 to the preprocessing node P2 for processing.

In step 7, the preprocessing node P2 finds the association analysis path [M1] of the alarm message A1.

In step 8, according to the found association analysis path, the preprocessing node P2 sends the change message C1 to the association analysis node M1 for processing, and then continues to process the subsequent processing.

In the streaming processing framework, each association analysis node can send the message to data through message middleware.

### Embodiment seven

The message in the embodiment is news data, and the embodiment relates to an association analysis of news data.

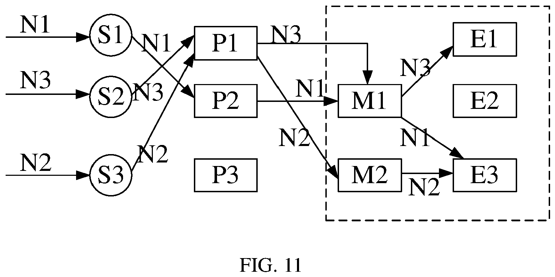

Referring to FIG. 11, in this example, news data is available to multiple data sources in the system, each piece of news data belonging to a different event and identified by a different key, and the processing process includes steps 1 to 12.

In step 1, a data source S1 acquires news data N1.

In step 2, according to a key of the news data N1, the data source S1 distributes the news data N1 to preprocessing node P2 for processing.

In step 3, the preprocessing node P2 finds through preprocessing of an association analysis that the news data N1 meets the limiting conditions of rule instances M1 and E3, and generates association analysis path [M 1, E3] of the news data N1.

In step 4, according to the association analysis path, the preprocessing node P2 sends the news data N1 to the association analysis node M1 for processing, the association analysis node M1 then sends the message to association analysis node E3 for processing, and then continues to process the subsequent processing process continues.

In step 5, a data source S3 acquires news data N2.

In step 6, according to a key of the news data N2, the data source S3 performs distribution to a preprocessing node P1 for processing.

In step 7, the preprocessing node P1 finds through preprocessing of an association analysis that the news data N2 meets the limiting conditions of rule instances M2 and E3, and generates an association analysis path [M2, E3] of the news data N1.

In step 8, according to the association analysis path, the preprocessing node P1 sends the news data N2 to the association analysis node M2 for processing, the association analysis node M2 then sends the news data N2 to the association analysis node E3 for processing, and then continues to process the subsequent processing.

In step 9, a data source S2 acquires news data N3.

In step 10, according to a key of the news data N3, the data source S2 distributes the news data N3 to the preprocessing node P1 for processing.

In step 11, the preprocessing node P1 finds through preprocessing of an association analysis that the news data N3 meets the limiting conditions of rule instances M1 and E1, and generates an association analysis path [M1, E1] of the news data N3.

In step 12, according to the association analysis path, the preprocessing node P1 sends the news data N3 to the association analysis node M1 for processing, the association analysis node M1 then sends the news data N3 to association analysis node E1 for processing, and then continues to process the subsequent processing.

News data of the same event may also have a subsequent additional report, which is equivalent to the change message. At this time, processing can be performed in the same manner as described in the above embodiment.

It will be understood by those of ordinary skill in the art that functional modules/units in all or part of the steps of the method, the system and the apparatus disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be implemented jointly by several physical components. Some or all components are implemented as software executed by processors such as central processing units, digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those of ordinary skill in the art, the term, computer storage medium, includes volatile and nonvolatile, removable and non-removable media implemented in any method or technology for storing information (such as computer-readable instructions, data structures, program modules or other data). The computer-storage medium includes, but is not limited to, a random access memory (RAM), a read only memory (ROM), an electrically erasable programmable read-only memory (EEPROM), a flash memory, or another memory technology, a compact disc read-only memory (CD-ROM), a digital video disc (DVD) or other optical disc storage, a magnetic cassette, a magnetic tape, disk storage or another magnetic storage apparatus, or any other medium used to store the desired information and accessible by a computer. In addition, as is known to those of ordinary skill in the art, the communication medium generally includes computer-readable instructions, data structures, program modules or other data in modulated data signals such as carriers or other transmission mechanisms, and may include any information delivery medium.

## Claims

1. A message processing method, **characterized by** comprising:
in response to receiving a first message of an event from a data source, searching for, by a preprocessing node, a processing object among rule instances created by a system, wherein the processing object comprises a rule instance of the first message (110);
establishing, by the preprocessing node, a processing path according to the rule instance, wherein the processing path comprises addressing information of a processing node where the rule instance is located (120); and
in response to determining that there is one processing node, sending, by the preprocessing node, the first message to the processing node according to the processing path so that the first message is processed by using the rule instance (130);
in response to determining that there are a plurality of processing nodes and the first message is sent in a broadcast manner, separately sending, by the preprocessing node in a broadcast manner, the first message to the plurality of processing nodes according to the processing path so that the first message is processed by using the rule instance (130); and
in response to determining that there are a plurality of processing nodes, the first message is sent in a serial distribution manner, and the processing path comprises addressing information of the plurality of processing nodes, sending, by the preprocessing node, a first processing node the first message and addressing information of all processing nodes following the first processing node in the processing path, and processing, by the first processing node, the first message by using a rule instance found on the first processing node; and in response to determining that the first processing node is not a last processing node among the plurality of processing nodes, sending a next processing node the first message and addressing information of all processing nodes following the first processing node in the processing path.

2. The processing method of claim 1, wherein after establishing, by the preprocessing node, the processing path according to the rule instance, the method further comprises:
saving, by the preprocessing node, the processing path; and
in response to receiving a subsequent message of the event from the data source, sending the subsequent message to the processing node according to the saved processing path.

3. The processing method of claim 1, wherein
the created rule instances are created according to at least one processing rule, and processing nodes where rule instances created according to different processing rules are different.

4. The processing method of claim 3, wherein
the created rule instances are divided into at least one group, and rule instances created according to a same processing rule are divided into one group; and
searching for, by the preprocessing node, the processing object among the created rule instances, wherein the processing object comprises the rule instance of the first message, comprises: searching for, by the preprocessing node, a rule instance in each group, and searching for at most one processing object in the each group, wherein the processing object comprises a rule instance of the event.

5. The processing method of claim 3, wherein
the addressing information of the processing node where the rule instance is located comprises an identifier of the rule instance; or
the addressing information of the processing node where the rule instance is located comprises an identifier and a type of the rule instance, wherein types of rule instances created according to a same processing rule are same, and types of the rule instances created according to the different processing rules are different.

6. The processing method of claim 1, wherein sending, by the preprocessing node, the first message to the processing node comprises:
writing, by the preprocessing node, a parameter and an identifier of the rule instance into the first message; and
sending the first message to the processing node.

7. A message processing method, **characterized by** comprising:
receiving, by a processing node according to a processing path, a message of an event from a preprocessing node or a previous processing node (210), wherein the processing path is established by the preprocessing node according to a rule instance and comprises addressing information of a processing node where the rule instance is located; and
in response to determining that either there is one processing node or there are a plurality of processing nodes and the message is a first message of the event which is received from the preprocessing node in a broadcast manner, processing, by the processing node, the first message by using a corresponding rule instance on the processing node (220);
in response to determining that there are a plurality of processing nodes, the message is a first message of the event which is received from the preprocessing node or the previous processing node in a serial distribution manner, and the processing path comprises addressing information of the plurality of processing nodes; processing, by the processing node, the first message by using a corresponding rule instance on the processing node; and in response to determining that the processing node is not a last processing node among the plurality of processing nodes, further receiving and storing addressing information of all processing nodes following the processing node in the processing path and sending the first message to a next processing node following the processing node according to the first message.

8. The processing method of claim 7, wherein after processing, by the processing node, the first message by using the corresponding rule instance on the processing node, the method further comprises:
in response to generating a new message of the event when the first message is processed, sending the new message to a data source responsible for collecting the message of the event.

9. A message preprocessing node, **characterized by** comprising:
a message receiving module (10), which is configured to receive a message from a data source;
an instance searching module (20), which is configured to, after the message receiving module receives a first message of an event, search for a processing object among rule instances created by a system, wherein the processing object comprises a rule instance of the first message;
a path establishing module (30), which is configured to establish a processing path according to the rule instance, wherein the processing path comprises addressing information of a processing node where the rule instance is located; and
a message sending module (40), which is configured to:
in response to determining that there is one processing node, send the first message to the processing node according to the processing path so that the first message is processed by using the rule instance;
in in response to determining that there are a plurality of processing nodes and the first message is sent in a broadcast manner, separately send the first message to the plurality of processing nodes according to the processing path so that the first message is processed by using the rule instance (130); and
in response to determining that there are a plurality of processing nodes, the first message is sent in a serial distribution manner, and the processing path comprises addressing information of the plurality of processing nodes, send a first processing node the first message and addressing information of all processing nodes following the first processing node in the processing path, and process the first message by using a rule instance found on the first processing node; and in response to determining that the first processing node is not a last processing node among the plurality of processing nodes, send a next processing node the first message and addressing information of all processing nodes following the first processing node in the processing path.

10. A message processing system, **characterized by** comprising: a data source, a preprocessing node and a processing node, wherein:
the data source is configured to send all messages of an event to the preprocessing node;
the preprocessing node is the preprocessing node of claim 9; and
the processing node is configured to:
either receive a message of the event from the preprocessing node in a broadcast manner, and in response to determining that either there is one processing node or there are a plurality of processing nodes and the message is a first message of the event, process the first message by using a rule instance on the processing node;
or receive a message of the event from the preprocessing node or a previous processing node in a serial distribution manner; in response to determining that there are a plurality of processing nodes, the message is a first message of the event and the processing path comprises addressing information of the plurality of processing nodes, process the first message by using a corresponding rule instance on the processing node; and in response to determining that the processing node is not a last processing node among the plurality of processing nodes, further receive and store addressing information of all processing nodes following the processing node in the processing path and send the first message to a next processing node following the processing node according to the first message.

11. A message processing apparatus, **characterized by** comprising a memory, a processor, and computer programs stored in the memory and executable on the processor, wherein when executing the computer programs, the processor implements the method of any one of claims 1 to 6.

12. A computer-readable storage medium, which is configured to store computer programs, wherein when executing the computer programs, the processor implements the method of any one of claims 1 to 6.

## Patentansprüche

1. Verfahren zur Nachrichtenverarbeitung, **gekennzeichnet dadurch, dass** es Folgendes umfasst:
als Reaktion auf das Empfangen einer ersten Nachricht eines Ereignisses von einer Datenquelle, Suchen, durch einen Vorverarbeitungsknoten, eines Verarbeitungsobjekts unter Regelinstanzen, die durch ein System erstellt werden, wobei das Verarbeitungsobjekt eine Regelinstanz der ersten Nachricht (110) umfasst;
Einrichten, durch den Vorverarbeitungsknoten, eines Verarbeitungspfads gemäß der Regelinstanz, wobei der Verarbeitungspfad Adresseninformationen eines Verarbeitungsknotens darüber umfasst, wo sich die Regelinstanz befindet (120); und
als Reaktion auf das Bestimmen, dass ein Verarbeitungsknoten vorhanden ist, Senden, durch den Vorverarbeitungsknoten, der ersten Nachricht an den Verarbeitungsknoten gemäß dem Verarbeitungspfad, sodass die erste Nachricht unter Verwendung der Regelinstanz (130) verarbeitet wird;
als Reaktion auf das Bestimmen, dass eine Vielzahl von Verarbeitungsknoten vorhanden ist und die erste Nachricht als Broadcast gesendet wird, separates Senden der ersten Nachricht an die Vielzahl von Verarbeitungsknoten gemäß dem Verarbeitungspfad durch den Vorverarbeitungsknoten als Broadcast, sodass die erste Nachricht unter Verwendung der Regelinstanz (130) verarbeitet wird; und
als Reaktion auf das Bestimmen, dass eine Vielzahl von Verarbeitungsknoten vorhanden ist, wobei die erste Nachricht in einer seriellen Verteilungsweise gesendet wird und der Verarbeitungspfad Adresseninformationen der Vielzahl von Verarbeitungsknoten umfasst, Senden der ersten Nachricht und Adresseninformationen aller Verarbeitungsknoten, die dem ersten Verarbeitungsknoten in dem Verarbeitungspfad folgen, durch den Vorverarbeitungsknoten an einen ersten Verarbeitungsknoten, und Verarbeiten der ersten Nachricht durch den ersten Verarbeitungsknoten unter Verwendung einer Regelinstanz, die an dem ersten Verarbeitungsknoten vorliegt; und als Reaktion auf das Bestimmen, dass der erste Verarbeitungsknoten kein letzter Verarbeitungsknoten unter der Vielzahl von Verarbeitungsknoten ist, Senden der ersten Nachricht und der Adresseninformationen aller Verarbeitungsknoten, die dem ersten Verarbeitungsknoten in dem Verarbeitungspfad folgen, an einen nächsten Verarbeitungsknoten.

2. Verarbeitungsverfahren nach Anspruch 1, wobei nach dem Einrichten des Bearbeitungspfads gemäß der Regelinstanz durch den Vorverarbeitungsknoten das Verfahren ferner umfasst:
Speichern des Bearbeitungspfads durch den Vorverarbeitungsknoten; und
als Reaktion auf das Empfangen einer nachfolgenden Nachricht des Ereignisses von der Datenquelle, Senden der nachfolgenden Nachricht an den Verarbeitungsknoten gemäß dem gespeicherten Verarbeitungspfad.

3. Verarbeitungsverfahren nach Anspruch 1, wobei
die erstellten Regelinstanzen gemäß mindestens einer Verarbeitungsregel erstellt werden und wobei Verarbeitungsknoten, in denen Regelinstanzen, die gemäß unterschiedlichen Verarbeitungsregeln erstellt werden, unterschiedlich sind.

4. Verarbeitungsverfahren nach Anspruch 3, wobei
die erstellten Regelinstanzen in mindestens eine Gruppe unterteilt sind und Regelinstanzen, die gemäß einer gleichen Verarbeitungsregel erstellt wurden, in eine Gruppe unterteilt sind; und
das Suchen nach dem Verarbeitungsobjekt unter den erstellten Regelinstanzen durch den Vorverarbeitungsknoten, wobei das Verarbeitungsobjekt die Regelinstanz der ersten Nachricht umfasst, Folgendes umfasst: Suchen nach einer Regelinstanz in jeder Gruppe durch den Vorverarbeitungsknoten und Suchen nach höchstens einem Verarbeitungsobjekt in jeder Gruppe, wobei das Verarbeitungsobjekt eine Regelinstanz des Ereignisses umfasst.

5. Verarbeitungsverfahren nach Anspruch 3, wobei
die Adresseninformationen des Verarbeitungsknotens, an dem sich die Regelinstanz befindet, eine Kennung der Regelinstanz umfassen; oder
die Adresseninformationen des Verarbeitungsknotens, in dem sich die Regelinstanz befindet, eine Kennung und einen Typ der Regelinstanz umfassen, wobei Typen von Regelinstanzen, die nach einer gleichen Verarbeitungsregel erstellt werden, gleich sind und Typen der Regelinstanzen, die gemäß den unterschiedlichen Verarbeitungsregeln erstellt werden, unterschiedlich sind.

6. Verarbeitungsverfahren nach Anspruch 1, wobei das Senden der ersten Nachricht an den Verarbeitungsknoten durch den Vorverarbeitungsknoten Folgendes umfasst:
Schreiben eines Parameters und einer Kennung der Regelinstanz durch den Vorverarbeitungsknoten in die erste Nachricht; und
Senden der ersten Nachricht an den Verarbeitungsknoten.

7. Verfahren zur Nachrichtenverarbeitung, **gekennzeichnet dadurch, dass** es Folgendes umfasst:
Empfangen einer Nachricht eines Ereignisses von einem Vorverarbeitungsknoten oder einem vorherigen Verarbeitungsknoten (210) durch einen Verarbeitungsknoten gemäß einem Verarbeitungspfad, wobei der Verarbeitungspfad durch den Vorverarbeitungsknoten gemäß einer Regelinstanz eingerichtet wird und Adresseninformationen eines Verarbeitungsknotens darüber umfasst, wo sich die Regelinstanz befindet; und
als Reaktion auf das Bestimmen, dass entweder ein Verarbeitungsknoten oder eine Vielzahl von Verarbeitungsknoten vorhanden ist und die Nachricht eine erste Nachricht des Ereignisses ist, das von dem Vorverarbeitungsknoten per Übertragung empfangen wird, Verarbeiten der ersten Nachricht unter Verwendung einer entsprechenden Regelinstanz an dem Verarbeitungsknoten durch den Verarbeitungsknoten (220);
als Reaktion auf das Bestimmen, dass eine Vielzahl von Verarbeitungsknoten vorhanden ist, die Nachricht eine erste Nachricht des Ereignisses ist, die von dem Vorverarbeitungsknoten oder dem vorherigen Verarbeitungsknoten in einer seriellen Verteilungsweise empfangen wird, und der Verarbeitungspfad Adresseninformationen der Vielzahl von Verarbeitungsknoten umfasst; Verarbeiten der ersten Nachricht durch den Verarbeitungsknoten unter Verwendung einer entsprechenden Regelinstanz an dem Verarbeitungsknoten; und als Reaktion auf das Bestimmen, dass der Verarbeitungsknoten nicht der letzte Verarbeitungsknoten unter der Vielzahl von Verarbeitungsknoten ist, ferner Empfangen und Speichern von Adresseninformationen aller Verarbeitungsknoten, die dem Verarbeitungsknoten in dem Verarbeitungspfad folgen, und Senden der ersten Nachricht an einen nächsten Verarbeitungsknoten, der dem Verarbeitungsknoten gemäß der ersten Nachricht folgt.

8. Verarbeitungsverfahren nach Anspruch 7, wobei nach dem Verarbeiten durch den Verarbeitungsknoten die erste Nachricht unter Verwendung der entsprechenden Regelinstanz an dem Verarbeitungsknoten ferner Folgendes umfasst:
als Reaktion auf das Erzeugen einer neuen Nachricht des Ereignisses, wenn die erste Nachricht verarbeitet wird, Senden der neuen Nachricht an eine Datenquelle, die für das Sammeln der Nachricht des Ereignisses verantwortlich ist.

9. Nachrichtenvorverarbeitungsknoten, **gekennzeichnet dadurch, dass** er Folgendes umfasst:
ein Nachrichtenempfangsmodul (10), das dazu konfiguriert ist, eine Nachricht von einer Datenquelle zu empfangen;
ein Instanzsuchmodul (20), das dazu konfiguriert ist, dem Nachrichtenempfangsmodul eine erste Nachricht eines Ereignisses nach einem Verarbeitungsobjekt unter von einem System erstellten Regelinstanzen zu suchen, wobei das Verarbeitungsobjekt eine Regelinstanz der ersten Nachricht umfasst;
ein Pfaderstellungsmodul (30), das dazu konfiguriert ist, einen Bearbeitungspfad gemäß der Regelinstanz einzurichten, wobei der Bearbeitungspfad Adressinformationen eines Verarbeitungsknotens umfasst, an dem sich die Regelinstanz befindet; und
ein Nachrichtensendemodul (40), das zu Folgendem konfiguriert ist:
als Reaktion auf das Bestimmen, dass ein Verarbeitungsknoten vorhanden ist, Senden, durch den Vorverarbeitungsknoten, der ersten Nachricht an den Verarbeitungsknoten gemäß dem Verarbeitungspfad, sodass die erste Nachricht unter Verwendung der Regelinstanz verarbeitet wird;
als Reaktion auf das Bestimmen, dass eine Vielzahl von Verarbeitungsknoten vorhanden ist und die erste Nachricht als Broadcast gesendet wird, Senden der ersten Nachricht entsprechend dem Verarbeitungspfad separat, sodass die erste Nachricht unter Verwendung der Regelinstanz (130) verarbeitet wird; und
als Reaktion auf das Bestimmen, dass eine Vielzahl von Verarbeitungsknoten vorhanden ist, wobei die erste Nachricht in einer seriellen Verteilungsweise gesendet wird und der Verarbeitungspfad Adresseninformationen der Vielzahl von Verarbeitungsknoten umfasst, Senden der ersten Nachricht und Adresseninformationen aller Verarbeitungsknoten, die dem ersten Verarbeitungsknoten in dem Verarbeitungspfad folgen, an einen ersten Verarbeitungsknoten, und Verarbeiten der ersten Nachricht durch den ersten Verarbeitungsknoten unter Verwendung einer Regelinstanz, die an dem ersten Verarbeitungsknoten vorliegt;
und als Reaktion auf das Bestimmen, dass der erste Verarbeitungsknoten kein letzter Verarbeitungsknoten unter der Vielzahl von Verarbeitungsknoten ist, Senden der ersten Nachricht und der Adresseninformationen aller Verarbeitungsknoten, die dem ersten Verarbeitungsknoten in dem Verarbeitungspfad folgen, an einen nächsten Verarbeitungsknoten.

10. System zur Nachrichtenverarbeitung, **gekennzeichnet dadurch, dass** es Folgendes umfasst: eine Datenquelle, einen Vorverarbeitungsknoten und einen Verarbeitungsknoten, wobei:
die Datenquelle dazu konfiguriert ist, alle Nachrichten eines Ereignisses an den Vorverarbeitungsknoten zu senden;
der Vorverarbeitungsknoten der Vorverarbeitungsknoten nach Anspruch 9 ist; und
der Verarbeitungsknoten zu Folgendem konfiguriert ist:
entweder eine Nachricht des Ereignisses von dem Vorverarbeitungsknoten als Broadcast zu empfangen und als Reaktion auf das Bestimmen, dass entweder ein Verarbeitungsknoten oder mehrere Verarbeitungsknoten vorhanden sind und die Nachricht eine erste Nachricht des Ereignisses ist, die erste Nachricht zu verarbeiten, indem eine Regelinstanz an dem Verarbeitungsknoten verwendet wird;
oder eine Nachricht des Ereignisses vom Vorverarbeitungsknoten oder einem vorherigen Verarbeitungsknoten in einer seriellen Verteilung zu empfangen; als Reaktion auf das Bestimmen, dass eine Vielzahl von Verarbeitungsknoten vorhanden ist, die Nachricht eine erste Nachricht des Ereignisses ist, und der Verarbeitungspfad Adresseninformationen der Vielzahl von Verarbeitungsknoten umfasst; Verarbeiten der ersten Nachricht unter Verwendung einer entsprechenden Regelinstanz an dem Verarbeitungsknoten; und als Reaktion auf das Bestimmen, dass der Verarbeitungsknoten nicht der letzte Verarbeitungsknoten unter der Vielzahl von Verarbeitungsknoten ist, ferner Empfangen und Speichern von Adresseninformationen aller Verarbeitungsknoten, die dem Verarbeitungsknoten in dem Verarbeitungspfad folgen, und Senden der ersten Nachricht an einen nächsten Verarbeitungsknoten, der dem Verarbeitungsknoten gemäß der ersten Nachricht folgt.

11. Vorrichtung zur Nachrichtenverarbeitung, **gekennzeichnet dadurch, dass** sie einen Speicher, einen Prozessor und Computerprogramme umfasst, die in dem Speicher gespeichert und auf dem Prozessor ausführbar sind, wobei der Prozessor beim Ausführen der Computerprogramme das Verfahren nach einem der Ansprüche 1 bis 6 implementiert.

12. Computerlesbares Speichermedium, das dazu konfiguriert ist, Computerprogramme zu speichern, wobei der Prozessor beim Ausführen der Computerprogramme das Verfahren nach einem der Ansprüche 1 bis 6 implementiert.

## Revendications

1. Procédé de traitement de messages, **caractérisé en ce qu'**il comprend :
en réponse à la réception d'un premier message d'un événement en provenance d'une source de données, la recherche, par un noeud de prétraitement, d'un objet de traitement parmi des instances de règles créées par un système, dans lequel l'objet de traitement comprend une instance de règle du premier message (110) ;
l'établissement, par le noeud de prétraitement, d'un chemin de traitement selon l'instance de règle, dans lequel le chemin de traitement comprend des informations d'adressage d'un noeud de traitement où se trouve l'instance de règle (120) ; et
en réponse à la détermination qu'il existe un noeud de traitement, l'envoi, par le noeud de prétraitement, du premier message au noeud de traitement selon le chemin de traitement de sorte que le premier message soit traité en utilisant l'instance de règle (130) ;
en réponse à la détermination qu'il existe une pluralité de noeuds de traitement et que le premier message est envoyé de manière diffusée, l'envoi séparé, par le noeud de prétraitement de manière diffusée, du premier message à la pluralité de noeuds de traitement selon le chemin de traitement de sorte que le premier message soit traité en utilisant l'instance de règle (130) ; et
en réponse à la détermination qu'il existe une pluralité de noeuds de traitement, le premier message est envoyé d'une manière de distribution en série, et le chemin de traitement comprend les informations d'adressage de la pluralité de noeuds de traitement, l'envoi, par le noeud de prétraitement, à un noeud de traitement du premier message et des informations d'adressage de tous les noeuds de traitement suivant le premier noeud de traitement dans le chemin de traitement, et le traitement, par le premier noeud de traitement, du premier message en utilisant une instance de règle trouvée sur le premier noeud de traitement ;
et en réponse à la détermination que le premier noeud de traitement n'est pas un dernier noeud de traitement parmi la pluralité de noeuds de traitement, l'envoi au noeud de traitement suivant du premier message et des informations d'adressage de tous les noeuds de traitement suivant le premier noeud de traitement dans le chemin de traitement.

2. Procédé de traitement selon la revendication 1, dans lequel après l'établissement, par le noeud de prétraitement, du chemin de traitement selon l'instance de règle, le procédé comprend en outre :
la sauvegarde, par le noeud de prétraitement, du chemin de traitement ; et
en réponse à la réception d'un message ultérieur de l'événement provenant de la source de données, l'envoi du message ultérieur au noeud de traitement selon le chemin de traitement sauvegardé.

3. Procédé de traitement selon la revendication 1, dans lequel les instances de règle créées sont créées selon au moins une règle de traitement, et des noeuds de traitement où des instances de règle créées selon différentes règles de traitement sont différents.

4. Procédé de traitement selon la revendication 3, dans lequel les instances de règle créées sont divisées en au moins un groupe, et les instances de règle créées selon une même règle de traitement sont divisées en un groupe ; et
la recherche, par le noeud de prétraitement, de l'objet de traitement parmi les instances de règle créées, dans lequel l'objet de traitement comprend l'instance de règle du premier message, comprend : la recherche, par le noeud de prétraitement, d'une instance de règle dans chaque groupe, et la recherche d'au plus un objet de traitement dans chaque groupe, dans lequel l'objet de traitement comprend une instance de règle de l'événement.

5. Procédé de traitement selon la revendication 3, dans lequel les informations d'adressage du noeud de traitement où se trouve l'instance de règle comprennent un identifiant de l'instance de règle ; ou
les informations d'adressage du noeud de traitement où se trouve l'instance de règle comprennent un identifiant et un type de l'instance de règle, dans lequel les types d'instances de règle créées selon une même règle de traitement sont identiques, et les types des instances de règle créées selon les différentes règles de traitement sont différents.

6. Procédé de traitement selon la revendication 1, dans lequel l'envoi, par le noeud de prétraitement, du premier message au noeud de traitement comprend :
l'écriture, par le noeud de prétraitement, d'un paramètre et d'un identifiant de l'instance de règle dans le premier message ; et
l'envoi du premier message au noeud de traitement.

7. Procédé de traitement de messages, **caractérisé en ce qu'**il comprend :
la réception, par un noeud de traitement selon un chemin de traitement, d'un message d'un événement en provenance d'un noeud de prétraitement ou d'un noeud de traitement précédent (210), dans lequel le chemin de traitement est établi par le noeud de prétraitement selon une instance de règle et comprenant des informations d'adressage d'un noeud de traitement où se trouve l'instance de règle ; et
en réponse à la détermination qu'il existe soit un noeud de traitement, soit une pluralité de noeuds de traitement et que le message est un premier message de l'événement qui est reçu du noeud de prétraitement de manière diffusée, le traitement, par le noeud de traitement, du premier message en utilisant une instance de règle correspondante sur le noeud de traitement (220) ;
en réponse à la détermination qu'il existe une pluralité de noeuds de traitement, le message est un premier message de l'événement qui est reçu en provenance du noeud de prétraitement ou du noeud de traitement précédent d'une manière de distribution en série, et le chemin de traitement comprend des informations d'adressage de la pluralité de noeuds de traitement ; le traitement, par le noeud de traitement, du premier message en utilisant une instance de règle correspondante sur le noeud de traitement ; et en réponse à la détermination que le noeud de traitement n'est pas un dernier noeud de traitement parmi la pluralité de noeuds de traitement, la réception et le stockage en outre d'informations d'adressage de tous les noeuds de traitement suivant le noeud de traitement dans le chemin de traitement et l'envoi du premier message à un noeud de traitement suivant suivant le noeud de traitement selon le premier message.

8. Procédé de traitement selon la revendication 7, dans lequel après traitement, par le noeud de traitement, du premier message en utilisant l'instance de règle correspondante sur le noeud de traitement, le procédé comprend en outre :
en réponse à la génération d'un nouveau message de l'événement lorsque le premier message est traité, l'envoi du nouveau message à une source de données chargée de collecter le message de l'événement.

9. Noeud de prétraitement de messages, **caractérisé en ce qu'**il comprend :
un module de réception de message (10), qui est configuré pour recevoir un message d'une source de données ;
un module de recherche d'instance (20), qui est configuré pour, après que le module de réception de message a reçu un premier message d'un événement, rechercher un objet de traitement parmi des instances de règle créées par un système, dans lequel l'objet de traitement comprend une instance de règle du premier message ;
un module d'établissement de chemin (30), qui est configuré pour établir un chemin de traitement selon l'instance de règle, dans lequel le chemin de traitement comprend des informations d'adressage d'un noeud de traitement où l'instance de règle est située ; et
un module d'envoi de messages (40), qui est configuré pour :
en réponse à la détermination qu'il existe un noeud de traitement, envoyer le premier message au noeud de traitement selon le chemin de traitement de sorte que le premier message soit traité en utilisant l'instance de règle ;
en réponse à la détermination qu'il existe une pluralité de noeuds de traitement et que le premier message est envoyé de manière diffusée, envoyer de manière séparée le premier message à la pluralité de noeuds de traitement selon le chemin de traitement de sorte que le premier message soit traité en utilisant l'instance de règle (130) ; et
en réponse à la détermination qu'il existe une pluralité de noeuds de traitement, le premier message est envoyé d'une manière de distribution en série, et le chemin de traitement comprend les informations d'adressage de la pluralité de noeuds de traitement, envoyer à un premier noeud de traitement le premier message et des informations d'adressage de tous les noeuds de traitement suivant le premier noeud de traitement dans le chemin de traitement, et traiter le premier message en utilisant une instance de règle trouvée sur le premier noeud de traitement ;
et en réponse à la détermination que le premier noeud de traitement n'est pas un dernier noeud de traitement parmi la pluralité de noeuds de traitement, envoyer au noeud de traitement suivant le premier message et des informations d'adressage de tous les noeuds de traitement suivant le premier noeud de traitement dans le chemin de traitement.

10. Système de traitement de messages, **caractérisé en ce qu'**il comprend : une source de données, un noeud de prétraitement et un noeud de traitement, dans lequel :
la source de données est configurée pour envoyer tous les messages d'un événement au noeud de prétraitement ;
le noeud de prétraitement est le noeud de prétraitement de la revendication 9 ; et
le noeud de traitement est configuré pour :
soit recevoir un message de l'événement en provenance du noeud de prétraitement de manière diffusée, et en réponse à la détermination qu'il existe soit un noeud de traitement, soit une pluralité de noeuds de traitement et que le message est un premier message de l'événement, traiter le premier message en utilisant une instance de règle sur le noeud de traitement ;
ou recevoir un message de l'évènement en provenance du noeud de prétraitement ou du noeud de traitement précédent d'une manière de distribution en série ; en réponse à la détermination qu'il existe une pluralité de noeuds de traitement, le message est un premier message de l'événement, et le chemin de traitement comprend des informations d'adressage de la pluralité de noeuds de traitement, traiter le premier message en utilisant une instance de règle correspondante sur le noeud de traitement ; et
en réponse à la détermination que le noeud de traitement n'est pas un dernier noeud de traitement parmi la pluralité de noeuds de traitement, recevoir et stocker en outre des informations d'adressage de tous les noeuds de traitement suivant le noeud de traitement dans le chemin de traitement et envoyer le premier message à un noeud de traitement suivant suivant le chemin de traitement selon le premier message.

11. Appareil de traitement de messages, **caractérisé en ce qu'**il comprend une mémoire, un processeur et des programmes informatiques stockés dans la mémoire et exécutables sur le processeur, dans lequel lorsqu'il exécute les programmes informatiques, le processeur met en œuvre le procédé selon l'une quelconque des revendications 1 à 6.

12. Support de stockage lisible par ordinateur, qui est configuré pour stocker des programmes informatiques, dans lequel lorsqu'il exécute les programmes informatiques, le processeur met en œuvre le procédé selon l'une quelconque des revendications 1 à 6.
